# EUROPÄISCHE PATENTANMELDUNG

(11) **EP 4 606 469 A1**
(43) Veröffentlichungstag der Anmeldung: **27.08.2025**
(21) Anmeldenummer: 24158544.7
(22) Anmeldetag: 20.02.2024
(51) Int. Cl.: B01J 8/02, B01D 53/56, B01D 53/86

(54) **SEGMENTIERTE HALTEVORRICHTUNG FÜR SCHÜTTGUTKÖRPER**

(71) Anmelder: Heraeus Precious Metals GmbH & Co. KG, 63450 Hanau (DE)
(72) Erfinder: Hesse, Jens, 63450 Hanau (DE); Heinrich, Andreas, 63450 Hanau (DE); Bohnenberger, Joerg, 63450 Hanau (DE); Jantsch, Uwe, 63450 Hanau (DE); Henkes, Oliver, 63450 Hanau (DE)
(74) Vertreter: Heraeus IP

(57) **Zusammenfassung**

Die vorliegende Erfindung betrifft eine Haltevorrichtung für Schüttgutkörper, die sich insbesondere für die Verwendung in Ammoniakoxidationsreaktoren eignet, sowie einen Reaktor, der eine solche Haltevorrichtung umfasst. Die Erfindung betrifft außerdem ein Verfahren zur katalytischen Oxidation von Ammoniak. Die Haltevorrichtung weist eine Außenwand, eine gasdurchlässige Bodenplatte, mindestens ein starres Trennelement und mindestens ein flexibles und gasdurchlässiges Stützelement auf. Die Außenwand begrenzt ein Volumen, das von der gasdurchlässigen Bodenplatte in eine Richtung abgeschlossen wird und das starre Trennelement teilt das Volumen in mindestens zwei Hauptsegmente auf. Das starre Trennelement und das flexible und gasdurchlässige Stützelement sind derart angeordnet, dass mindestens eines der durch das starre Trennelement gebildeten Hauptsegmente in mindestens zwei Untersegmente aufgeteilt wird.

## Beschreibung

Die vorliegende Erfindung betrifft eine Haltevorrichtung für Schüttgutkörper, die sich insbesondere für die Verwendung in Ammoniakoxidationsreaktoren eignet, sowie einen Reaktor, der eine solche Haltevorrichtung umfasst. Die Erfindung betrifft außerdem ein Verfahren zur katalytischen Oxidation von Ammoniak.

Ammoniakoxidationsreaktoren werden bei der Synthese von Salpetersäure nach dem Ostwald-Verfahren eingesetzt, wobei Ammoniak (NH₃) und Sauerstoff (O₂) katalytisch zu Stickstoffmonoxid (NO) und Wasser (H₂O) umgesetzt werden. Der Produktgasstrom wird anschließend in Wasser geleitet, wo die Umsetzung zu Salpetersäure stattfindet. Die Ammoniakverbrennung wird bei hoher Temperatur (in der Regel 800 - 950 °C) an Katalysatoren aus Platin und/oder Platinlegierungen durchgeführt. Diese werden für gewöhnlich in Form von gewirkten oder gestrickten Netzen in mehreren Lagen im Reaktorquerschnitt installiert. Als Nebenprodukte der Ammoniakverbrennung entstehen Stickstoff (N₂) und Lachgas (N₂O). Im Gegensatz zu NO und NO₂ geht N₂O keine weiteren Reaktionen ein und wird nach Durchlaufen aller Prozessstufen an die Atmosphäre abgegeben. Um die Emission des umweltschädlichen N₂O zu reduzieren, werden in solchen Reaktoren daher häufig in Strömungsrichtung des Frischgases hinter der eigentlichen katalytischen Zone weitere katalytisch aktive Komponenten angeordnet, die das Lachgas zersetzen. Typischerweise werden entsprechende Sekundärkatalysatoren als Schüttgut eingesetzt, die in korbartigen Vorrichtungen bereitgestellt werden. Solche Katalysatorkörbe umfassen für gewöhnlich eine gasdurchlässige Bodenplatte, auf die das Schüttgut geschichtet wird. Das Schüttgut kann eine katalytische Aktivität aufweisen, es gibt jedoch auch Anwendungsfälle, in denen das Schüttgut zumindest teilweise keine katalytische Aktivität aufweist und beispielsweise zur Stützung der Katalysatornetze dient.

Durch die Bewegungen und Vibrationen während des Betriebs kann es dazu kommen, dass das Schüttgut komprimiert und/oder verdichtet wird. Dadurch wird die Höhe der Schüttung verringert. Insbesondere wenn das Schüttgut eine Stützfunktion für darüberliegende Katalysatornetze erfüllen soll, kann eine solche Komprimierung zu Rissen in den Netzen führen.

Aufgrund der hohen Temperaturen, bei denen der Ammoniakoxidationsreaktor betrieben wird, dehnt sich der Katalysatorkorb im Betrieb aus, was zu einer ungleichmäßigen Ausdehnung der gasdurchlässigen Bodenplatte im Vergleich zu den Seitenwänden des Korbs führen kann. Diese unterschiedliche Ausdehnung kann einerseits dazu führen, dass sich ein Spalt zwischen Wänden und Bodenplatte bildet, durch den das Schüttgut fallen kann. Ein weiteres Problem, das sich aus den thermischen Ausdehnungsunterschieden zwischen der gasdurchlässigen Bodenplatte und den Seitenwänden ergibt, ist eine Mulden- oder Wellenbildung des Schüttguts.

Beide Phänomene bewirken eine Beeinträchtigung der Schüttungsstruktur, was zu einem Verlust von Verbrennungseffizienz und einem Gasschlupf führen kann. Zur Stabilisierung des Schüttguts schlägt beispielsweise die DE 102011112782 A1 vor, auf der Bodenplatte eine netzartige Vorrichtung zu installieren, um den durch thermische Ausdehnung entstehenden Spalt zwischen Bodenplatte und Wänden abzudichten. In der WO 2023232853 A1 wird zur Verbesserung der Schüttgutstruktur bei zyklischer thermischer Belastung ein Katalysatorkorb bestehend aus miteinander verbundenen Modulen vorgeschlagen, die nebeneinander angeordnet sind und alle die gleiche Höhe haben. Der Aufbau von Katalysatorkörben aus einer Vielzahl von Modulen ist jedoch aufwendig und unflexibel.

Aufgrund von wechselnden Anforderungen an die katalytische Aktivität des Schüttgutes ist es zudem wünschenswert, dass die Schüttung flexibel und variabel gestaltet werden kann. So kann es erforderlich sein, verschiedene Schüttgüter in verschiedenen Segmenten des Katalysatorkorbs bereitzustellen, die wiederum voneinander getrennt und stabilisiert vorliegen sollen. Beispielsweise kann es erforderlich sein, nur eine Teilmenge des Volumens mit N₂O-Minderungskatalysatoren zu bestücken und das restliche Volumen mit katalytisch inaktiven Füllkörpern aufzufüllen. Auch eine Segmentierung von unterschiedlich aktiven Materialien kann erforderlich sein. Eine solche Segmentierung kann insbesondere vorteilhaft sein, wenn sie gleichzeitig in verschiedenen Ebenen in Bezug auf die Strömungsrichtung des Gases vorgenommen werden kann. Zudem ist es wünschenswert, solche Segmente variabel und flexibel gestalten zu können, um wechselnden Anforderungen für unterschiedliche Herstellungskampagnen gerecht werden zu können.

Die im Stand der Technik identifizierten Probleme werden zumindest teilweise gelöst durch eine Haltevorrichtung für Schüttgutkörper, die eine Außenwand, eine gasdurchlässige Bodenplatte, mindestens ein starres Trennelement und mindestens ein flexibles und gasdurchlässiges Stützelement aufweist. Die Außenwand begrenzt ein Volumen, das durch die gasdurchlässige Bodenplatte in eine Richtung abgeschlossen wird und das starre Trennelement teilt dieses Volumen in mindestens zwei Hauptsegmente. Das starre Trennelement und das flexible und gasdurchlässige Stützelement sind derart angeordnet, dass mindestens eines der durch das starre Trennelement gebildeten Hauptsegmente in mindestens zwei Untersegmente aufgeteilt wird.

Die erfindungsgemäße Haltevorrichtung ermöglicht eine stabile und gleichzeitig variable Gestaltung der Schüttung. Überraschend hat sich gezeigt, dass sich durch die Kombination von starren Trennelementen und flexiblen Stützelementen das Volumen des Katalysatorkorbes besonders vorteilhaft in mehrere Segmente unterteilen lässt. So wird einerseits die Bewegungen des Schüttguts gemindert, andererseits ermöglichen die flexiblen Stützelemente eine weitere Segmentierung des Korbvolumens. Insbesondere erlaubt die erfindungsgemäße Gestaltung, dass Segmente relativ zur Strömungsrichtung hintereinander als auch nebeneinander gebildet werden können. So können unterschiedliche Schüttgutkörper zwei- oder mehrlagig in die Haltevorrichtung eingebracht werden, beispielsweise in Form von Füllkörpern zur Homogenisierung des Gasvolumenstroms wie unbeschichtete Raschigringe und/oder in Form von Schüttgutkörpern mit Katalysatorfunktion, insbesondere zur N₂O-Minderung.

Die vorliegende Erfindung betrifft eine Haltevorrichtung für Schüttgutkörper, die eine Außenwand und eine gasdurchlässige Bodenplatte aufweist. Die Außenwand begrenzt ein Volumen, das wiederum von der gasdurchlässigen Bodenplatte in eine Richtung abgeschlossen wird. Mit anderen Worten umschließt die Außenwand ein Volumen mit einer ersten und einer gegenüberliegenden zweiten Öffnung, wobei die zweite Öffnung von der gasdurchlässigen Bodenplatte begrenzt wird.

Die Außenwand ist am Randbereich der Bodenplatte so angeordnet, dass sie den Randbereich der Bodenplatte vollständig umschließt. Der so gebildete Raum ist insbesondere zur Aufnahme von Schüttgutkörpern geeignet. Solche Haltevorrichtungen können beispielsweise als Katalysatorkorb in Strömungsreaktoren eingesetzt werden, in diesen Fällen werden sie so im Reaktorinnenraum angeordnet, dass sie von den Prozessgasen durchströmt werden. Die Haltevorrichtung wird dabei so platziert, dass das Prozessgas in Strömungsrichtung zunächst durch die erste Öffnung der Haltevorrichtung (der gasdurchlässigen Bodenplatte gegenüberliegend) strömt, die Vorrichtung passiert und die Haltevorrichtung durch die zweite Öffnung der Außenwand bzw. durch die gasdurchlässige Bodenplatte verlässt. Mit anderen Worten ist unter der Strömungsrichtung die Richtung entlang des kürzesten Abstands zwischen der ersten Öffnung und der gasdurchlässigen Bodenplatte zu verstehen. Wenn im Rahmen der vorliegenden Anmeldung auf die Strömungsrichtung Bezug genommen wird, soll stets diese Definition zugrunde gelegt werden.

Der Durchmesser der Haltevorrichtung kann über ihre Höhe konstant sein, er kann aber ebenso zu- oder abnehmen. Unter der Höhe ist die Ausdehnung der Haltevorrichtung parallel zur Strömungsrichtung zu verstehen. Die Höhe der Haltevorrichtung liegt typischerweise im Bereich von 100 bis 1000 mm. Die Haltevorrichtung kann einen Durchmesser im Bereich von 800 bis 6000 mm aufweisen.

Bei der gasdurchlässigen Bodenplatte kann es sich beispielswiese um eine Lochplatte, ein Sieb, insbesondere ein Spaltsieb, ein Netz oder einen Rost, beispielsweise einen Wabenrost, handeln. Die gasdurchlässige Bodenplatte kann einstückig gefertigt sein, sie kann ebenso aus mehreren Komponenten gebildet werden. Die gasdurchlässigen Öffnungen der Bodenplatte sind typischerweise kleiner als die durchschnittliche Größe der Schüttgutkörper, die in der Schüttung direkt auf ihr angeordnet werden. Die gasdurchlässige Bodenplatte kann flach sein, sie kann ebenso einen U- oder V-förmigen Querschnitt aufweisen. Die Form der gasdurchlässigen Bodenplatte ist nicht weiter beschränkt und richtet sich üblicherweise nach der Form des Reaktors in der sie verwendet wird, beispielsweise kann sie rund, oval, rechteckig, quadratisch, hexagonal oder oktogonal geformt sein, bevorzugt ist die gasdurchlässige Bodenplatte rund oder im Wesentlichen rund. Die Form der gasdurchlässigen Bodenplatte bestimmt im Wesentlichen die Querschnittsform der Haltevorrichtung parallel zur Bodenplatte.

Die Außenwand kann, muss aber nicht, aus mehreren Einzelteilen bestehen. Bei der mindestens einen Außenwand kann es sich beispielsweise um ein ringförmiges Blech handeln, das einstückig oder aus mehreren Komponenten bestehen kann. Die Außenwand ist üblicherweise gerade, mit anderen Worten ist sie in Strömungsrichtung praktisch nicht gebogen. Die Außenwand kann senkrecht oder in einem Winkel zur Lotrechten der Bodenplatte auf der Bodenplatte angeordnet sein, die Haltevorrichtung kann dementsprechend eine zylinderförmige, wannenförmige oder kegelförmige Form aufweisen.

Die Form des Querschnitts der Haltevorrichtung parallel zur Strömungsrichtung ist nicht weiter beschränkt, beispielsweise kann die Haltevorrichtung einen runden, ovalen, rechteckigen, quadratischen, hexagonalen oder oktogonalen Querschnitt entlang der Strömungsrichtung aufweisen, bevorzugt weist die Haltevorrichtung einen runden oder im Wesentlichen runden Querschnitt auf.

Die Außenwand und die gasdurchlässige Bodenplatte können miteinander verbunden sein, bevorzugt weisen sie jedoch keine mechanische und/oder formschlüssige Verbindung auf, um unterschiedliche thermische Ausdehnungen im Reaktorbetrieb ausgleichen zu können. Zwischen Außenwand und gasdurchlässiger Bodenplatte kann die Haltevorrichtung einen umlaufenden Spalt aufweisen. In weiteren Konfigurationen kann die Außenwand eine innenliegende Tragevorrichtung aufweisen, beispielsweise in Form eines zumindest teilweise umlaufenden Tragrings, auf der die gasdurchlässige Bodenplatte schwimmend angeordnet sein kann.

Geeignete Materialien für Bodenplatte und Außenwand müssen den Bedingungen im Reaktor während des Prozesses standhalten und sind dem Fachmann bekannt, beispielsweise können Nickel-Chrom-Legierungen (NiCr-Legierungen) wie Inconel600, Eisen-Chrom-AluminiumLegierungen (FeCrAl-Legierungen) wie Megapyr oder Kanthal oder hitzebeständige Edelstähle eingesetzt werden, wobei sich NiCr-Legierungen als besonders geeignet erwiesen haben. Die gasdurchlässige Bodenplatte kann aus dem gleichen Material wie die Außenwand bestehen, es können jedoch auch unterschiedliche Materialien eingesetzt werden.

Die Haltevorrichtung weist mindestens ein starres Trennelement auf. Das starre Trennelement zeichnet sich insbesondere dadurch aus, dass sich seine Form durch die Füllung der Haltevorrichtung mit Schüttgutkörpern nicht oder nur minimal verändert, es also keine oder nur eine minimale Flexibilität unter mechanischer Belastung zeigt. Das starre Trennelement ist innerhalb des Volumens der Haltevorrichtung angeordnet, mit anderen Worten ist es oberhalb der gasdurchlässigen Bodenplatte und innerhalb der Außenwand angeordnet.

Das starre Trennelement teilt das durch die Außenwand umschlossene Volumen in mindestens zwei Hauptsegmente auf. Unter einem Segment wird hierbei ein Volumenbereich innerhalb der Haltevorrichtung verstanden, der zumindest in zwei Richtungen von mindestens einem Element der Haltevorrichtung, also dem mindestens einen Trennelement, der Außenwand, der gasdurchlässigen Bodenplatte und/oder dem mindestens einen Stützelement, begrenzt wird. Die Segmente sind dabei jeweils vollständig voneinander getrennt. Die Segmente können in eine Richtung offen sein, also nicht von einem der Elemente der Haltevorrichtung begrenzt werden. Das starre Trennelement ist derart angeordnet, dass die Hauptsegmente innerhalb des Volumens von Gas durchströmt werden können. Mit anderen Worten verschließt das starre Trennelement das Volumen nicht, insbesondere nicht gasundurchlässig.

Das starre Trennelement kann beispielswiese aus einer NiCr-Legierung wie Inconel600, einer FeCrAl-Legierung wie Megapyr oder Kanthal oder einem hitzebeständigen Edelstahl bestehen. Als besonders vorteilhaft haben sich Bleche aus einer NiCr-Legierung, insbesondere aus Inconel600, herausgestellt.

Bei dem starren Trennelement kann es sich beispielsweise um ein ringförmiges Blech handeln, das einstückig sein kann oder aus mehreren Komponenten bestehen kann.

Vorzugseise ist das starre Trennelement parallel zur Strömungsrichtung ausgerichtet, insbesondere ist das starre Trennelement so angeordnet, dass ein Gasstrom durch die Haltevorrichtung möglichst wenig behindert wird. Insbesondere kann das starre Trennelement senkrecht zu der gasdurchlässigen Bodenplatte ausgerichtet sein. Die Haltevorrichtung kann über mehr als ein starres Trennelement verfügen. Vorteilhafterweise ist das starre Trennelement oder die mehreren starren Trennelemente um die zentrale Achse der Haltevorrichtung angeordnet. Eine derartige Anordnung erlaubt insbesondere die Bildung von mindestens zwei konzentrischen Hauptsegmenten.

Die Trennvorrichtung oder die Trennvorrichtungen können über Vorrichtungen verfügen, die zur stabilisierenden Ausrichtung der Trennvorrichtung oder Trennvorrichtungen auf der gasdurchlässigen Bodenplatte dienen können. Solche stabilisierenden Haltevorrichtungen können beispielsweise in Form von flachen Blechen vorgesehen sein. Solche Bleche können senkrecht zu der Höhenausdehnung der Trennvorrichtung an einer Kante der Trennvorrichtung angebracht sein, insbesondere parallel zur gasdurchlässigen Bodenplatte, ebenso können solche Bleche senkrecht zu der gasdurchlässigen Bodenplatte und parallel zur Strömungsrichtung angeordnet sein. Die stabilisierende Haltevorrichtung oder Haltevorrichtungen kann/können gasdurchlässig sein, also gasdurchlässige Öffnungen aufweisen, sie kann oder sie können aber ebenso gasundurchlässig sein.

Die Haltevorrichtung weist außerdem mindestens ein flexibles und gasdurchlässiges Stützelement auf. Die Flexibilität des Stützelements zeichnet sich insbesondere dadurch aus, dass es sich unter thermischen Belastungszyklen und dem Einfluss der Schüttgutkörper elastisch verhält. Die Gasdurchlässigkeit des Stützelementes ergibt sich aus vorhandenen Öffnungen in der Flächenausdehnung.

Die Dehnbarkeit des flexiblen und gasdurchlässigen Stützelementes beträgt vorteilhafterweise unter mechanischer und/oder thermischer Belastung in Flächenrichtung mindestens 0,05 %, bevorzugt mindestens 0,5 %. Die Dehnbarkeit in Flächenrichtung sollte 10 %, bevorzugter 5 % nicht überschreiten. Dehnbarkeiten in diesem Bereich gewährleisten, dass sich das Stützelement thermischen Ausdehnungen anpassen kann, ohne beschädigt zu werden und ohne, dass Schüttgutkörper durch die gasdurchlässigen Öffnungen gelangen.

Bei dem flexiblen und gasdurchlässigen Stützelement handelt es sich beispielsweise um gewebte, gewirkte oder gestrickte Maschenware, beispielsweise in Form eines Netzes. Solche flächenförmigen Maschenwaren sind besonders als Stützelemente geeignet, da sie in mindestens eine Richtung ihrer Ausdehnung flexibel und dehnbar sind. Sie werden typischerweise aus Draht oder Drähten des entsprechenden Materials hergestellt. Bei dem flexiblen und gasdurchlässigen Stützelement kann es sich beispielswiese um ein Netz aus einer NiCr-Legierung wie Inconel600, aus einer FeCrAl-Legierung wie Megapyr oder Kanthal oder aus einem hitzebeständigen Edelstahl handeln. Als besonders vorteilhaft haben sich Stütznetze aus FeCrAI-Legierungen, insbesondere aus Megapyr oder Kanthal, herausgestellt.

Vorzugsweise umfasst das flexible und gasdurchlässige Stützelement mindestens einen Draht, der beispielsweise einen Durchmesser von 0,01 - 3 mm aufweist, bevorzugt von 0,1 - 2 mm. Die Maschenweite des Stützelementes ist nicht weiter beschränkt, sie kann beispielsweise im Bereich von 0,01 bis 10 cm liegen, insbesondere im Bereich von 0,05 bis 1 cm. Bevorzugt sind die Öffnungen des gasdurchlässigen Stützelements kleiner als die der gasdurchlässigen Bodenplatte, insbesondere weisen die Öffnungen eine geringere Maschenweite auf.

Das mindestens eine starre Trennelement und das mindestens eine flexible und gasdurchlässige Stützelement sind derart angeordnet, dass mindestens eines der durch das starre Trennelement gebildeten Hauptsegmente in mindestens zwei Untersegmente aufgeteilt wird. Das flexible und gasdurchlässige Stützelement erstreckt sich also durch mindestens ein Hauptsegment. Mit anderen Worten wird das durch die Außenwand begrenzte Volumen in mindestens drei Segmente aufgeteilt. Eine solche Anordnung erlaubt eine modulare Gestaltung des Volumens der Haltevorrichtung, was wiederum die Segmentierung des Schüttguts ermöglicht. Eine solche Schüttgutsegmentierung ermöglicht, dass sowohl der Gasfluss über den Reaktorquerschnitt als auch die katalytische Aktivität in Strömungsrichtung, also senkrecht zum Reaktorquerschnitt, optimiert und aufeinander abgestimmt werden können.

Die Form der Segmente ist nicht weiter begrenzt, sie können beispielswiese einen runden, ovalen, rechteckigen, quadratischen, hexagonalen, oktogonalen oder ringförmigen Querschnitt aufweisen und zylinderförmig, hohl-zylinderförmig oder quaderförmig ausgebildet sein

Das mindestens eine starre Trennelement und das mindestens eine flexible und gasdurchlässige Stützelement können auch so angeordnet sein, dass mehr als drei Segmente gebildet werden.

Vorteilhafterweise sind die mindestens zwei durch das flexible und gasdurchlässige Stützelement gebildeten Untersegmente in Strömungsrichtung hintereinander angeordnet. Insbesondere hat es sich als vorteilhaft erwiesen, wenn mindestens zwei der mindestens drei Segmente unterschiedliche Höhen aufweisen, besonders bevorzugt sind die zwei Segmente mit unterschiedlichen Höhen in Strömungsrichtung hintereinander angeordnet.

Das flexible und gasdurchlässige Stützelement kann den Querschnitt der Haltevorrichtung ganz oder teilweise überspannend, vorteilhafterweise ist es so angeordnet, dass es den gesamten Querschnitt der Haltevorrichtung überspannt.

Das flexible und gasdurchlässige Stützelement ist bevorzugterweise im Querschnitt zumindest teilweise U-förmig innerhalb des Volumens der Haltevorrichtung angeordnet, insbesondere innerhalb eines der durch die starre Trennvorrichtung gebildeten Hauptsegmente. Das gasdurchlässige Stützelement kann im Querschnitt auch wellenförmig innerhalb des Volumens der Haltevorrichtung angeordnet sein, insbesondere kann es wellenförmig um und über dem starren Trennelement angeordnet sein.

Das flexible und gasdurchlässige Stützelement ist vorteilhafterweise so angeordnet, dass sich seine Flächenausdehnung zumindest teilweise im zentralen Volumenbereich der Haltevorrichtung befindet, das Stützelement ist dabei bevorzugt zumindest teilweise parallel zur gasdurchlässigen Bodenplatte angeordnet. In einer solchen Konfiguration wird der zentrale Volumenbereich der Haltevorrichtung, mit anderen Worten ein zentrales Hauptsegment, vorteilhafterweise in zwei Untersegmente geteilt. Die Untersegmente können in Strömungsrichtung die gleichen oder unterschiedliche Höhen haben, sie können außerdem das gleiche oder unterschiedliche Volumen aufweisen.

Bevorzugt ist das flexible und gasdurchlässige Stützelement schwimmend auf und/oder um das starre Trennelement angeordnet. Insbesondere sind das flexible und gasdurchlässige Stützelement und das starre Trennelement nicht fest miteinander verbunden. Eine schwimmende Installation von Trennelement und Stützelement ermöglicht eine Haltevorrichtung, die das enthaltene Schüttgut auch bei hohen thermischen Belastungen stabilisiert und deren Stützwirkung nicht von thermischen Belastungen beeinträchtigt wird. Besonders vorteilhaft kann außerdem sein, wenn weder das flexible und gasdurchlässige Stützelement und/oder das starre Trennelementmit fest mit der Außenwand verbunden sind. Unter einer festen Verbindung wird hierbei eine dauerhafte und starre Fixierung verstanden, beispielsweise durch Verschweißen oder Löten, also eine formschlüssige mechanische Verbindung. Eine lose Fixierung soll explizit dennoch möglich sein, beispielsweise durch ein Auflegen auf einer geeigneten Ankervorrichtung. Solche Ankervorrichtungen können beispielsweise in der gasdurchlässigen Bodenplatte vorgesehen sein und haken- oder stiftförmig ausgestaltet sein.

Die Haltevorrichtung kann auch über mehr als ein flexibles und gasdurchlässiges Stützelement verfügen. Eine Kombination mehrerer solcher Stützelemente erlaubt eine noch variablere Gestaltung des Innenvolumen der Haltevorrichtung. Die mehreren Stützelemente können dabei die gleiche Form und/oder die gleiche Größe und/oder das gleiche Material, oder unterschiedliche Formen und/oder Größen und/oder Materialien aufweisen. In bevorzugten Ausführungsformen kann die Haltevorrichtung beispielsweise über ein ringförmiges Netz verfügen, das so angeordnet ist, dass sich die Öffnung zentral im Volumen der Haltevorrichtung befindet und über ein weiteres rundes Netz, das schwimmend auf dieser Öffnung angeordnet ist.

Die Haltevorrichtung ist zur Aufnahme von Schüttgutkörpern ausgelegt. Unter Schüttgutkörpern werden Formkörper aus temperaturbeständigen Materialien verstanden, die als Füllkörper ohne katalytische Aktivität oder mit einem katalytisch aktiven Material ausgestattet vorliegen können. Die Schüttgutkörper können beispielsweise in Form von Kugeln, Granulaten, Pellets, Hohlzylindern, Mehrlochzylindern, Ringen, Tabletten, Zylindern, Würfeln, Speichenrädern, Trilobes oder Quadrulobes vorliegen. Die Formgebung solcher Schüttgutkörper kann mittels Extrusion, Granulierung oder Pressverfahren erfolgen. Die Größe bzw. der Äquivalenzdurchmesser der Schüttgutkörper wird so gewählt, dass die Schüttung eine geeignete Packungsdichte, einen möglichst geringen Druckverlust sowie optional eine geeignete katalytische Aktivität aufweist. Die Durchmesser oder die Größe solcher Schüttgutkörper können beispielsweise im Bereich von 0,5 bis 100 mm liegen, bevorzugt im Bereich von 1 bis 50 mm, insbesondere im Bereich von 2 bis 25 mm.

Geeignete Materialien für Schüttgutkörper sind dem Fachmann bekannt, besonders geeignet sind beispielsweise keramische Materialien, Metalloxide wie Aluminiumoxide oder Ceroxide, Metalle, sowie Zeolithe oder Mischungen aus den vorgenannten Materialien. Materialien für Füllkörper ohne katalytische Aktivität sind beispielsweise Aluminiumoxide. Bei katalytisch aktiven Schüttgutkörpern, auch Katalysatorformkörper genannt, hängt die Materialauswahl von der vorgesehenen katalytischen Funktion ab, zudem kann schon das Material des Schüttgutkörpers selbst katalytisch aktiv sein. Ebenso kann es sich um Schüttgutkörper handeln, bei denen ein Formkörper ohne katalytische Aktivität mit einer katalytisch wirksamen Komponente ausgestattet ist, wobei die katalytisch aktive Komponente homogen in der Formkörper-Matrix verteilt oder als katalytisch aktive Beschichtung vorliegen kann. Beispiele für katalytisch aktive Komponenten sind Edelmetallkomponenten, insbesondere Komponenten der Platinmetallgruppe, Eisen-Komponenten und/oder Übergangsmetall-Komponenten, insbesondere Kobalt-Komponenten. Unter einer katalytisch aktiven Komponente ist hierunter jede Verbindung oder Form des entsprechenden Metalls zu verstehen, beispielsweise die metallische Form und/oder die oxidische Form.

Verfahren zur Herstellung von katalytisch wirksamen Komponenten und/oder Beschichtungen sind dem Fachmann bekannt. Das Aufbringen von katalytisch wirksamen Komponenten kann beispielsweise durch Tauchen, Übergießen, Einpumpen oder Durchsaugen des Formkörpers mit einer Beschichtungssuspension erfolgen, die eine katalytisch aktive Komponente oder eine entsprechende Vorläuferverbindung enthält. Anschließend kann ein Trocknungsschritt erfolgen. Solche Verfahren werden üblicherweise auch als Washcoat-Verfahren bezeichnet. Alternativ oder ergänzend können ebenso Imprägnierverfahren, Ausfällung, Gasphasenabscheidung (*engl. chemical vapor deposition, CVD*) oder Sprühverfahren zum Einsatz kommen.

Die erfindungsgemäße Haltevorrichtung ist insbesondere geeignet, um gleichzeitig verschiedene Arten von Schüttgutkörpern bereitzustellen, beispielsweise Schüttgutkörper mit verschiedenen Größen und/oder unterschiedlichen Materialien. Insbesondere die Kombination von katalytisch unwirksamen Füllkörpern mit Katalysatorformkörpern in verschiedenen Segmenten der Haltevorrichtung ist bevorzugt.

Die Haltevorrichtung kann weitere Komponenten umfassen, beispielsweise kann direkt auf der gasdurchlässigen Bodenplatte zur weiteren Abdichtung eine weitere gasdurchlässige Vorrichtung aufgelegt oder angebracht sein, beispielsweise in Form eines Gewebes oder Netzes. Eine solche zusätzliche gasdurchlässige Vorrichtung teilt das Volumen nicht in weitere Segmente auf. Insbesondere für Konfigurationen, die einen Spalt zwischen gasdurchlässiger Bodenplatte und Außenwandaufweisen, kann eine solche zusätzliche Haltevorrichtung zur weiteren Abdichtung des Spaltes angeordnet werden.

**Die vorliegende Erfindung betrifft außerdem einen Reaktor,** ausgestattet mit einer erfindungsgemäßen Haltevorrichtung. Vorzugsweise handelt es sich bei dem Reaktor um einen Strömungsreaktor, insbesondere einen Ammoniakoxidationsreaktor.

Neben der Haltevorrichtung umfasst der Reaktor weitere Komponenten, typischerweise mindestens einen Reaktorbehälter, in der die Haltevorrichtung angeordnet ist. Die Anordnung kann dabei so erfolgen, dass die Haltevorrichtung axial oder radial durchströmt wird.

Der Reaktor verfügt beispielsweise über Verankerungsvorrichtungen, mittels derer die Haltevorrichtung im Reaktor angebracht werden kann. Die Verankerung kann derart erfolgen, dass die Haltevorrichtung in eine entsprechende Vorrichtung eingehängt wird, oder beispielsweise auch, indem die Haltevorrichtung über eine Flanschverbindung am Reaktor angebracht ist. Alternativ kann die Haltevorrichtung auch im Reaktor angeschweißt sein.

Im Reaktor ist die Haltevorrichtung mit Schüttgutkörpern gefüllt, bei denen es sich wie oben beschrieben um Füllkörper ohne katalytische Aktivität und/oder Katalysatorformkörper handeln kann. Die Schüttgutkörper können die gleiche oder unterschiedliche Form und Größe aufweisen, typischerweise unterschieden sich zumindest die Schüttgutkörper in zwei der mindestens drei Segmente der Haltevorrichtung voneinander. Zu geeigneten Schüttgutkörpern sei auf die im Bezug auf die erfindungsgemäße Haltevorrichtung gemachten Ausführungen verwiesen, die ebenso für den erfindungsgemäßen Reaktor gelten.

Besonders vorteilhaft enthält die Haltevorrichtung ein Katalysatorbett, das eine katalytische Aktivität im Hinblick auf die N₂O-Zersetzung aufweist, mit anderen Worten enthält die Haltevorrichtung vorteilhafterweise zumindest teilweise eine Sekundärkatalysator-Schüttung.

Vorteilhafterweise umfasst der Reaktor mindestens eine weitere katalytische Vorrichtung, beispielsweise in Form von einem oder mehreren Katalysatornetze(n), insbesondere in Form von Katalysatornetzen aus einer Platinlegierung. Solche katalytischen Vorrichtungen werden typischerweise in Strömungsrichtung oberhalb der erfindungsgemäßen Haltevorrichtung angeordnet und auch als Primärkatalysatoren bezeichnet.

Insbesondere kann der Reaktor als weitere katalytische Vorrichtung ein Katalysatorsystem umfassen. Unter einem Katalysatorsystem wird hierin ein Ensemble von Netzen verstanden, das mindestens ein Katalysatornetz umfasst. Mit anderen Worten umfasst ein Katalysatorsystem einen Stapel von Netzen, bei denen es sich bei mindestens einem Netz mit katalytischer Aktivität handelt, insbesondere ein Edelmetallnetz. Ein Katalysatorsystem kann auch ein Netz oder mehrere Netze ohne katalytische Funktion umfassen, beispielsweise Catchment-Netze, die zur Rückgewinnung von im Betrieb verdampfenden Edelmetall dienen, oder Stütznetze, die zur Stabilisierung des Katalysatorsystems dienen und typischerweise kein Edelmetall enthalten.

Bei einem Edelmetallnetz handelt es sich um ein Netz, das mindestens einen Edelmetalldraht enthält. Unter einem Edelmetalldraht wird ein Draht verstanden, der aus mindestens einem Edelmetall besteht oder der einen nennenswerten Anteil (> 50 Gew.-%) an Edelmetall enthält. Unter Edelmetallen wird im Rahmen der vorliegenden Erfindung ein Metall ausgewählt aus der Gruppe bestehend aus Platinmetallen, Gold und Silber verstanden. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen. Bevorzugt besteht der Edelmetalldraht aus Platin, einer Platinlegierung, Palladium oder einer Palladiumlegierung. Eine Platinlegierung enthält mehr als 50 Gew.-% Platin, als weitere Legierungsbestandteile sind insbesondere Palladium, Rhodium und Ruthenium zu nennen. Eine Palladiumlegierung enthält mehr als 50 Gew.-% Palladium, als weitere Legierungsbestandteile sind insbesondere Platin, Rhodium, Ruthenium, Nickel, Wolfram und Gold zu nennen.

Als edelmetallfreie Netze eignen sich beispielsweise Netze aus einem hitzebeständigen Stahl, typischerweise einer FeCrAI-Legierung wie Megapyr oder Kanthal, Edelstahl oder aus hitzebeständigen Legierungen wie beispielsweise NiCr-Legierungen. Als besonders vorteilhaft haben sich Stütznetze aus Megapyr oder Kanthal herausgestellt.

Je nach Reaktortyp können weitere Komponenten vorhanden sein, beispielsweise Vorrichtungen zur Absorption der entstehenden Produkte, insbesondere bei Ammoniakoxidationsreaktoren sind solche Vorrichtungen in Form von Absorptionstürmen vorgesehen. In solchen Konfigurationen ist die Haltevorrichtung vorteilhafterweise zwischen Katalysatornetzen und Absorptionsturm angeordnet, um die sekundäre Katalysatorzone bereitzustellen.

Die Erfindung betrifft außerdem ein Verfahren zur katalytischen Oxidation von Ammoniak, bei dem ein mindestens Lachgas (N₂O) enthaltender Prozessgasstrom durch eine erfindungsgemäße Haltevorrichtung geleitet wird. Unter einem Prozessgas ist hierbei ein Gasgemisch zu verstehen, das durch die katalytische Umsetzung eines ammoniakhaltigen Frischgases entsteht.

Ein solches Verfahren umfasst beispielsweise zunächst die Umsetzung eines Ammoniakhaltigen Frischgases an einem Primärkatalysator, typischerweise in einem Temperaturbereich von 800 bis 900 °C. Bei dem Primärkatalysator kann es sich beispielsweise um ein hierin beschriebenes Katalysatorsystem handeln, das mindestens ein Edelmetallnetz umfasst. Das entstehende Prozessgas umfasst neben den Hauptprodukten auch Lachgas als Nebenprodukt. Das Verfahren umfasst im Anschluss die Umsetzung dieses Prozessgases in einer erfindungsgemäßen Haltevorrichtung, die zweckmäßigerweise mindestens einen Schüttgutkörper mit katalytischer Aktivität zur N₂O-Zersetzung enthält. Dafür wird das Prozessgas in Strömungsrichtung durch die Haltevorrichtung geleitet, die die Katalysatorformkörper enthält. Zu geeigneten Schüttgutkörpern sei auf die im Bezug auf die erfindungsgemäße Haltevorrichtung gemachten Ausführungen verwiesen, die ebenso für das erfindungsgemäße Verfahren gelten.

Nachfolgend wird die Erfindung anhand von Abbildungen und Ausführungsbeispielen erläutert. Gleiche Bezugszeichen bezeichnen dabei gleiche Teile in unterschiedlichen Ausführungsformen; sie sind nicht bei jeder Ausführungsform explizit genannt. Die Darstellungen sind weder maßstabsgetreu noch geben sie die tatsächlichen Größenverhältnisse korrekt wieder.

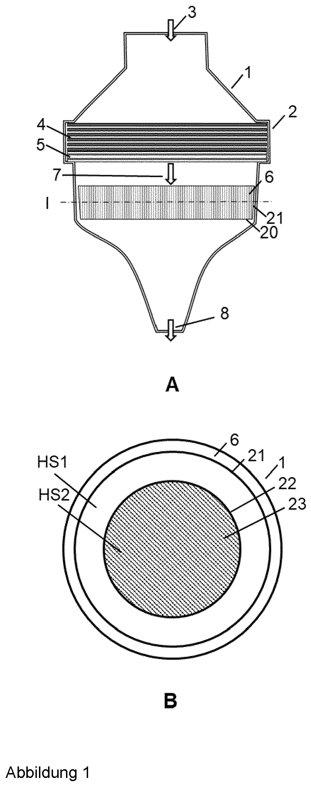

**Abbildung 1** **A** zeigt schematisch einen senkrecht positionierten Strömungsreaktor (1) zur heterogen-katalytischen Verbrennung von Ammoniak. Das Katalysatorsystem (2) bildet die eigentliche Reaktionszone des Strömungsreaktors (1). Das gezeigte Katalysatorsystem (2) umfasst mehrere, in Strömungsrichtung (3) des Frischgases hintereinander angeordnete Netze (4, 5). Das Katalysatorsystem (2) umfasst eine Katalysatornetzgruppe (4) und ein darunter angeordnetes edelmetallfreies Stütznetz (5). In Strömungsrichtung unter der Katalysatornetzgruppe ist eine Haltevorrichtung für Schüttgutkörper (6) angeordnet.

Das Frischgas ist beispielsweise ein Ammoniak-Luftgemisch, das auf eine Vorheiztemperatur erwärmt und von oben in den Reaktor (1) unter erhöhten Druck eingeleitet wird. Beim Eintritt in das Katalysatorsystem (2) erfolgen eine Zündung des Gasgemischs und eine anschließende exotherme Verbrennungsreaktion. Dabei findet folgende Hauptreaktion statt:

4 NH₃ + 5 O₂→4 NO + 6 H₂O

Dabei wird Ammoniak (NH₃) zu Stickstoffmonoxid (NO) und Wasser (H₂O) umgesetzt. Das gebildete Stickstoffmonoxid (NO) reagiert im abströmenden Reaktionsgasgemisch (symbolisiert durch den die Strömungsrichtung des abströmenden anzeigenden Richtungspfeil 7) mit überschüssigem Sauerstoff zu Stickstoffdioxid (NO₂). Das Prozessgas wird im Anschluss durch die Haltevorrichtung (6) geleitet, die einen zur Lachgas-Zersetzung geeignete Katalysatorkomponente enthält. Das entstehende Reaktionsgasgemisch (symbolisiert durch den die Strömungsrichtung anzeigenden Richtungspfeil 8) wird abschließend mit Wasser in einer nachgeschalteten Absorptionsanlage (nicht gezeigt) zu Salpetersäure (HNO₃) umgesetzt wird.

**Abbildung 1** **B** zeigt einen Querschnitt des Strömungsreaktors (1) entlang der Ebene I parallel zur gasdurchlässigen Bodenplatte. Die Ebene I befindet sich oberhalb der gasdurchlässigen Bodenplatte (20) der Haltevorrichtung (6), diese ist daher in Abb. 1 B nicht zu sehen. Auch die Katalysatorformkörper bzw. die Schüttgutkörper, mit denen die Haltevorrichtung im Betrieb gefüllt ist, sind zur besseren Übersichtlichkeit nicht gezeigt. Die Haltevorrichtung (6) hat einen runden Querschnitt und ist innerhalb der Reaktorwand angebracht. Die Außenwand (21) der Haltevorrichtung (6) umschließt ein Volumen, das durch die Trennvorrichtung (22) in zwei Hauptsegmente (HS1, HS2) aufgeteilt wird. Innerhalb des zweiten Segments HS2 ist ein Netz (23) als Stützvorrichtung für Katalysatorformkörper angeordnet (Ebene I verläuft durch die Netzebene). Dadurch wird das Segment HS2 in zwei Untersegmente geteilt, die sich in Strömungsrichtung oberhalb und unterhalb des Netzes (23) befinden.

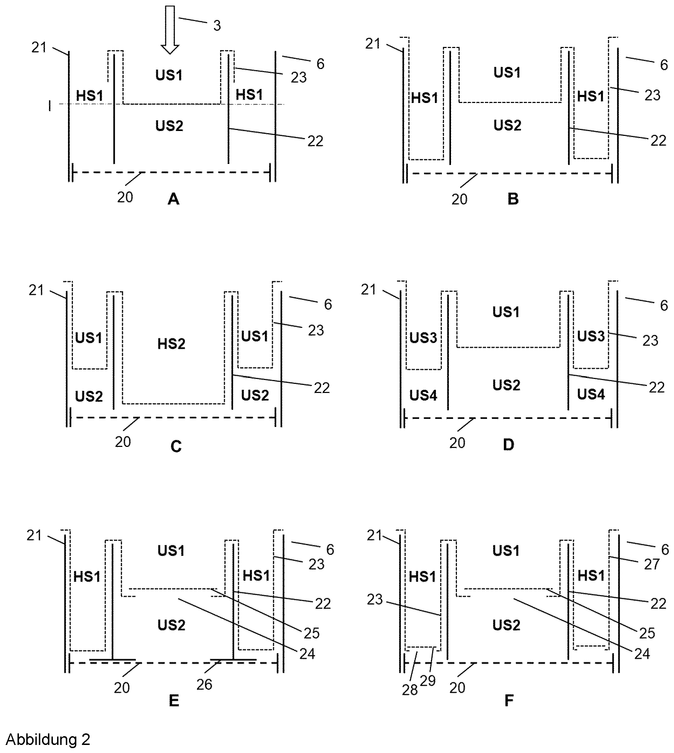

In **Abbildung 2** sind schematische Querschnittsansichten verschiedener Ausführungsformen von erfindungsgemäßen Haltevorrichtungen gezeigt. Typischerweise handelt es sich bei der Außenwand (21) um ein ringförmiges Blech und bei der Bodenplatte (20) um ein Gitter, jeweils aus Inconel600. Das Trennelement (22) ist bevorzugterweise ebenfalls ein ringförmiges Blech aus Inconel600. Als weiteres Stützelement (23) wird bevorzugt ein Netz aus Kanthal eingesetzt. In allen Ausführungsformen kann das Netz (23) lediglich aufgelegt sein, es kann jedoch auch vorteilhaft sein, dass es zumindest teilweise mit der Bodenplatte (20) und/oder der Außenwand (21) lose befestigt ist. Alle beschriebenen Merkmale können untereinander auch beliebig kombiniert werden.

Abb. 2 A entspricht der Haltevorrichtung (6) aus Abb. 1. Die Ebene I und die Strömungsrichtung (3) sind nochmals eingezeichnet. Innerhalb der Außenwand (21) ist das Trennelement (22) angeordnet, das das von der Außenwand (21) umschlossene Volumen in zwei Segmente unterteilt. Das Trennelement (22) ist auf dem gitterförmigen Boden (20) platziert. Über dem Trennelement (22) ist ein Netz (23) derart angeordnet, dass das zentrale Segment wiederum in zwei Untersegmente (US1 und US2) unterteilt wird. Das Netz (23) ist im zentralen Segment U-förmig angeordnet und liegt lose auf dem Trennelement (22) auf. Das äußere Segment (HS1) ist insgesamt in Form eines Hohlzylinders ausgebildet und umschließt die beiden in Strömungsrichtung hintereinander angeordneten zylinderförmigen Untersegmente (US1, US2).

In der Ausführungsform gemäß Abb. 2 B überspannt das Netz (23) den gesamten Querschnitt der Haltevorrichtung. Im äußeren Bereich, bzw. im Bereich des äußeren Segments (HS1) liegt das Netz auf der Bodenplatte (20) auf - es ist derart platziert, dass das äußere Segment HS1 nicht weiter unterteilt wird.

In der Ausführungsform gemäß Abb. 2 C überspannt das Netz (23) ebenfalls den gesamten Haltevorrichtungs-Querschnitt und ist wellenförmig angeordnet. Im mittleren Segment (HS2) liegt es auf der Bodenplatte (20) auf und umgibt dieses Segment im Querschnitt U-förmig. Das äußere Segment wird durch das Netz in zwei Segmente (US1 und US2) geteilt.

In der Ausführungsform gemäß Abb. 2 D teilt das Netz (23) beide durch die Trennvorrichtung (22) gebildeten Hauptsegmente, die Haltevorrichtung (6) umfasst dementsprechend insgesamt vier Segmente (US1-4).

Die Ausführungsform gemäß Abb. 2 E umfasst ein auf dem Trennelement (22) aufliegendes Netz (23) mit einer zentral platzierten Öffnung (24). Auf dieser Öffnung wiederum ist schwimmend ein weiteres Netz (25) angeordnet, das die Öffnung (24) überspannt. Diese modulare Anordnung von Netzen verbessert die Stabilität der Netzkonstruktion gegenüber thermischen Belastungszyklen weiter. Das Trennelement umfasst außerdem eine Stützvorrichtung (26), die die Stabilität der Trennvorrichtung weiter erhöht. Bei dieser Stützvorrichtung handelt es sich beispielsweise um einen an der Trennvorrichtung angeschweißten umlaufenden Ring.

Eine weitere Ausführungsform, die drei Segmente aufweist, ist in Abb. 2 F gezeigt. Auf dem Trennelement (22) liegt ein Netz (23) auf, das derart angeordnet ist, dass im zentralen Hauptsegment eine Öffnung (24) vorhanden ist, die von einem schwimmend aufliegenden Netz (25) überspannt wird, wodurch zwei Untersegmente (US1, US2) gebildet werden. Zusätzlich ist entlang der Außenwand (21) ein weiteres Netz (27) aufgelegt. Die beiden Netze (23) und (27) überspannen die gesamte Höhe der Haltevorrichtung (6) und sind so angeordnet, dass sie oberhalb der Bodenplatte (2) im Bereich des äußeren Hauptsegments (HS1) eine Öffnung (28) bilden. Auf dieser Öffnung (28) ist ein weiteres ringförmiges Netz (29) angeordnet, dass die Öffnung verschließt und das Volumen der Haltevorrichtung in Richtung der Bodenplatte (2) abschließt.

## Patentansprüche

1. Haltevorrichtung für Schüttgutkörper, aufweisend
- eine Außenwand, die ein Volumen begrenzt,
- eine gasdurchlässige Bodenplatte, die das durch die Außenwand begrenzte Volumen in eine Richtung abschließt,
- mindestens ein starres Trennelement, das das durch die Außenwand umschlossene Volumen in mindestens zwei Hauptsegmente aufteilt und
- mindestens ein flexibles und gasdurchlässiges Stützelement,
wobei
das starre Trennelement und das flexible und gasdurchlässige Stützelement derart angeordnet sind, dass mindestens eines der durch das starre Trennelement gebildeten Hauptsegmente in mindestens zwei Untersegmente aufgeteilt wird.

2. Haltevorrichtung gemäß Anspruch 1, wobei die mindestens zwei durch das flexible gasdurchlässige gebildeten Untersegmente in Strömungsrichtung hintereinander angeordnet sind.

3. Haltevorrichtung gemäß Anspruch 1 oder 2, wobei mindestens zwei der mindestens drei Segmente unterschiedliche Höhen aufweisen.

4. Haltevorrichtung gemäß Anspruch 3, wobei die zwei Segmente mit unterschiedlichen Höhen in Strömungsrichtung hintereinander angeordnet sind.

5. Haltevorrichtung gemäß einem der vorangegangenen Ansprüche, wobei das starre Trennelement parallel zu einer Strömungsrichtung ausgerichtet ist.

6. Haltevorrichtung gemäß einem der vorangegangenen Ansprüche, wobei das flexible und gasdurchlässige Stützelement den gesamten Querschnitt der Haltevorrichtung überspannt.

7. Haltevorrichtung gemäß einem der vorangegangenen Ansprüche, wobei das flexible und gasdurchlässige Stützelement im Querschnitt zumindest teilweise U-förmig innerhalb des Volumens der Haltevorrichtung angeordnet ist.

8. Haltevorrichtung gemäß einem der vorangegangenen Ansprüche, wobei das flexible und gasdurchlässige Stützelement schwimmend auf und/oder um das starre Trennelement angeordnet ist.

9. Haltevorrichtung gemäß einem der vorangegangenen Ansprüche, wobei es sich bei dem flexiblen und gasdurchlässigen Stützelement um gewebte, gewirkte oder gestrickte Maschenware handelt.

10. Haltevorrichtung gemäß einem der vorangegangenen Ansprüche, wobei die Außenwand und die gasdurchlässige Bodenplatte keine mechanische und/oder formschlüssige Verbindung aufweisen.

11. Haltevorrichtung gemäß einem der vorangegangenen Ansprüche, wobei die Haltevorrichtung über mehr als ein flexibles und gasdurchlässiges Stützelement verfügt.

12. Haltevorrichtung gemäß einem der vorangegangenen Ansprüche, wobei der Durchmesser der Haltevorrichtung über ihre Höhe konstant ist.

13. Reaktor umfassend eine Haltevorrichtung gemäß einem der Ansprüche 1 bis 12.

14. Verfahren zur katalytischen Oxidation von Ammoniak, bei dem ein mindestens N₂O enthaltender Prozessgasstrom durch eine Haltevorrichtung gemäß einem der Ansprüche 1 bis 12 geleitet wird.
